# NEW EUROPEAN PATENT SPECIFICATION

(11) **EP 0 657 314 B2**
(45) Date of publication and mention of the opposition decision: **24.07.2002**
(45) Mention of the grant of the patent: 06.08.1997
(21) Application number: 94309130.6
(22) Date of filing: 07.12.1994
(51) Int. Cl.: B60C 23/06, B60C 23/04

(54) **Apparatus for alarming tyre deflation**
Warnvorrichtung für Reifendruckverlust
Dispositif d'alarme en cas de dégonflage de pneumatique

(30) Priority: 10.12.1993 JP 31027593
(43) Date of publication of application: 14.06.1995
(73) Proprietor: SUMITOMO RUBBER INDUSTRIES LIMITED, Kobe-shi, Hyogo-ken (JP); SUMITOMO ELECTRIC INDUSTRIES, LTD, Osaka-shi, Osaka-fu 541 (JP)
(72) Inventor: Yanase, Manao, Kobe-shi, Hyogo-ken (JP)
(74) Representative: Manitz, Finsterwald & Partner GbR

(56) References cited:
- EP-A- 0 036 755
- EP-A- 0 221 522
- EP-A- 0 239 545
- EP-A- 0 284 895
- EP-A- 0 641 679
- WO-A-86/07316
- DE-A- 2 850 787
- DE-A- 3 835 236
- DE-A- 3 916 176
- DE-C- 3 236 520
- FR-A- 2 313 219
- PATENT ABSTRACTS OF JAPAN vol. 6, no. 88 (P-118) (966) 26 May 1982 & JP-A-57 024 837 (NIPPON DENSO) 9 February 1982

## Description

The present invention relates to an apparatus for alarming a driver of tyre deflation.

Safe and comfortable travel can be assured by keeping the pressures of the tyres on a vehicle at the values specified. However, deflation of a tyre occurs occasionally from external damage or incomplete maintenance, which may seriously influence safety as well as the comfort of driving. Various kinds of apparatus to detect tyre deflation and warn a driver have been devised and marketed, but such apparatus have not yet spread widely because of the difficulty in compatibility of cost and reliability.

For example EP-A-0239545 discloses a system for monitoring and indicating acoustically the operating conditions of a motor vehicle including the pressure of the vehicle tyres.

In particular, with respect to the time period of an alarm and the reliability thereof, there exists a problem that it is very difficult to determine how far deflation should proceed before an alarm is given, since the degree of deflation for danger depends on vehicle speed. In other words, if the alarm is scheduled to sense a small deflation, there is a large merit in respect of security of safety. Slight deflation is, however, difficult to detect and a false alarm occurrence causes driver uneasiness and repeated false occurrences create a possibility that a driver may then ignore the alarm in a truly dangerous case. On the other hand, if the alarm is scheduled not to be given until the deflation proceeds to a large amount whilst reliability of the alarm becomes great there exists the problem in that the alarm may be too late in the case of high speed driving.

In view of the foregoing, it is an object of the present invention to provide an apparatus for warning of tyre deflation in which the reliability of the alarm is raised without these problems.

In addition, it is also an object of the present invention to provide a reliable apparatus for detecting tyre deflation in which a balance between the alarm loudness level and the danger are kept well and the balance between the accuracy of the alarm, the degree of urgency for the alarm and uneasiness given to a driver by the alarm is well set.

According to the present invention there is provided an apparatus for alarming tyre deflation comprising a deflation detection mechanism for detecting tyre deflation, a vehicle speed measuring device and an alarm mechanism for deciding an alarm level depending on the levels of tyre deflation detected by the deflation detection mechanism and the vehicle speed.

The apparatus for alarming tyre deflation of the present invention does not alarm unconditionally when a tyre reaches a particular deflation, but alarms depending on the degree of deflation in accordance with accuracy of the deflation detection mechanism. The apparatus also alarms at a level according to the vehicle speed since critical speeds at which a deflated tyre might suffer a burst differ from each other.

For example, in the case of an alarm device using sound as the warning or alarm signal, the higher a level of deflation becomes, the louder sound the device uses to alarm for the same speed, while the higher the level of vehicle speed becomes, the louder the sound the device uses to alarm for a constant level of deflation.

According to another aspect of the invention a method of alarming for a tyre deflation on a vehicle comprises determining and monitoring a deflation level characterised in that the method further comprises determining and monitoring a speed level of the vehicle, and alarming, wherein the alarm level is decided depending on levels of deflation levels and levels of vehicle speed.

Further aspects of the invention will be apparent from the following description, by way of example only, of one embodiment in conjunction with the attached drawing in which:

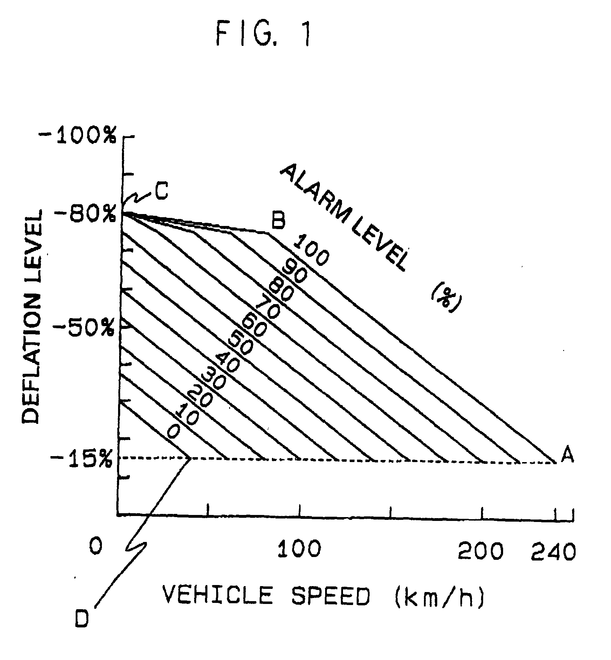

Figure 1 is a representation of an example of alarm level for an apparatus for alarming tyre deflation of the present invention, which shows a relationship between vehicle speed, deflation level and alarm level.

In the present specification, "deflation level" means the percentage of the deflated pressure to the total normal pressure of the tyre, and "alarm level" means the level of emergency perceived to a man, for example the loudness level of a sound in the case of an alarm using a sound warning.

As shown in Figure 1, in an apparatus for alarming tyre deflation, the alarm level becomes higher with increase in deflation level at a constant vehicle speed, while the alarm level becomes higher with increasing vehicle speed for a constant deflation level. A method for determining an alarm level in Figure 1 is as follows.

The line of 100% of an alarm level is set as a critical line for a tyre to cause a burst. When the alarm level exceeds the line of 100%, it is not unexpected for a tyre to cause a burst any time.

As a deflation detection mechanism for measuring tyre deflation, there are two types detecting tyre pressure directly or indirectly. For example, a combination of a pressure sensor and an FM transmitter or the like can be used. This senses pressure directly. Alternatively there is an indirect system in which a device detects the rotational speed of the tyre using an ABS sensor or the like and compares the tyres on the vehicle to decide the tyre pressure condition. Since the direct type of detection is complicated in a mechanism, it is liable to be expensive. On the other hand, the indirect detecting system can produce a system very economically by utilising the ABS sensors already fitted to a vehicle. It is, therefore, preferable to use the latter indirect detection type.

The lower limit of detection, which is not particularly limited in the present invention, is usually set at -15% (deflation of 0.3kg/cm² in the case of a normal pressure of 2kg/cm²). To measure a deflation smaller than 15% is difficult and lowers detection precision (detection accuracy) since pressure and rotational frequency of a tyre fluctuates under the influence of varying load, cornering and braking, and so on. Further, detection of a very small deflation is meaningless, taking it into consideration that such small deflations scarcely become a problem in so far as safety is concerned.

However, if the deflation level is only -15%, a tyre generates heat when the vehicle speed increases, and the tyre is then in danger of a burst particularly when the vehicle speed exceeds 240km/h. Therefore, a point on a segment corresponding to an alarm level of 100% is firstly plotted against a critical speed of 240km/h at a detection lower limit for deflation, i.e. -15%. This is regarded as a point A. Secondly, if the deflation level is -75% (deflation of 1.5kg/cm² in the case of a normal pressure of 2kg/cm²), the tyre is in danger of causing a burst when the vehicle speed exceeds 80km/h. This is regarded as a point B. Thirdly, if the deflation level exceeds -80%, since the tyre is very much in danger of causing a burst and departure from a rim then an alarm is required to be given as soon as possible, the alarm level is set at 100% at a vehicle speed of 0km/h. The point of an alarm level of -80% at the vehicle speed of 0km/h is regarded as a point C. Then this point C is connected to point B and further connected to point A. This then sets out a segment indicating the alarm level of 100%. This is the minimum line to maintain safety.

Next, lines which decrease 10 by 10% in alarm level are drawn on the basis of the segment AB corresponding to the alarm level of 100%. At this time, the point D corresponding to a deflation level of -15% and a vehicle speed of 40km/h is regarded as the point of an alarm level of 0%, and the segment from the point A to the point D is divided into 10 parts, and then segments are drawn from each dividing point parallel to the segment AB. Because a tyre is not in danger of causing a burst under a vehicle speed of not more than 40km/h in the case of a deflation level of -15%, and therefore the alarm level become 0%. Alarm levels of the segments are set at 90%, 80%, ........, in turn from the nearest to the segment AB.

The operation of an apparatus for alarming tyre deflation of the present invention is explained subsequently. For example, let it be supposed that air pressure began to decrease because of some accident when driving the vehicle at a constant speed of 80km/h on an expressway. At first, when the deflation level is between 0 and -15%, an alarm is not given, because the risk of causing a burst does not exist for such deflation as long as the vehicle speed is not so high, and because there are some cases where deflation does not occur actually since the detection accuracy of the deflation detection mechanism is low to such a degree of the deflation.

When the deflation level reaches -15%, the alarm level becomes abruptly 20% because of driving at a high speed of 80km/h. The alarm begins, however, to sound softly since the detection accuracy is not yet so high. As the deflation level gradually becomes higher and the detection accuracy also becomes higher, the alarm sound level also becomes higher. The volume of the alarm increases in the way that the alarm level becomes 40% and 80% respectively when the deflation level becomes -30% -75% (air pressure of only 0.5kg/cm² remaining in the case of normal air pressure of 2kg/cm²), the alarm level becomes 100% and the volume is the largest and the urgency given to a driver reaches the highest. So, the driver can immediately slow down the vehicle speed or can act to avoid a danger, for example, stop driving to wait for a maintenance service.

When the deflation level is -30% (air pressure of 1.4kg/cm² in the case of normal air pressure of 2kg/cm²), the alarm level is 0% at a vehicle speed of 0km/h but increases gradually according to the increase in the vehicle speed. Then, the alarm level becomes 20%, 40%, 60% and 100% respectively when the vehicle speed becomes 40km/h, 80km/h, 120km/h and 200km/h. So, the driver can avoid a danger beforehand, since the driver can hear and follow vehicle speed of around 40km/h with a smaller volume of the alarm and find a gasoline station or the like to have an air pressure check.

Though the alarm level is presented by the magnitude of volume (loudness) in the above explanation, since the alarm level is a magnitude of the impact given to a driver, the way of alarming in the present invention is not particularly limited. Thus the alarm level can be presented by an interval of voices or sounds as well as or in place of the volume when the alarm is given by a voice, and by a variation of brightness or colour of a lamp and by the frequency of on-and-off when an on-and-off lamp is utilised, and the combinations of these are also possible.

As for the vehicle speed measuring device, a speed indicator of a vehicle, a wheel speed sensor attached to ABS or a non-contact laser speedometer are also employable.

As has been described, since the alarm level is set depending upon the detection accuracy of the deflation detection mechanism in the tyre deflation alarm apparatus of the present invention, a driver can correctly avoid danger without unnecessarily feeling uneasy.

Since critical speeds for causing a burst differ from each other depending upon the deflation levels, the alarm level is, by measuring both the deflation level and the vehicle speed, set higher with increase in the deflation level in the case of a constant vehicle speed, or with increase in the vehicle speed in the case of a constant deflation level. Since the alarm is well timed to a degree of a danger in real driving the driver can correctly decide whether to slow down or stop immediately. Thus, the apparatus can alarm with high reliability without giving the driving unnecessary worry.

## Claims

1. An apparatus for alarming tyre deflation comprising a deflation detection mechanism for detecting tyre deflation, **characterised by** a vehicle speed measuring device and an alarm mechanism for deciding an alarm level depending on levels of tyre deflation detected by the deflation detection mechanism and on levels of vehicle speed.

2. A method for alarming tyre deflation on a vehicle comprising determining and monitoring a deflation level, **characterised in that** the method further comprises determining and monitoring a speed level of the vehicle, and alarming, wherein the alarm level is decided depending on levels of deflation levels and levels of vehicle speed.

## Patentansprüche

1. Reifendruckverlustalarmvorrichtung, umfassend einen Druckverlusterkennungsmechanismus, um Reifendruckverlust zu erkennen, **gekennzeichnet durch** eine Fahrzeuggeschwindigkeitsmeßeinrichtung und einen Alarmmechanismus, um einen Alarmpegel in Abhängigkeit von Reifendruckverlustpegeln, erkannt **durch** den Druckverlusterkennungsmechanismus, und von Fahrzeuggeschwindigkeitspegeln zu bestimmen.

2. Reifendruckverlustalarmverfahren an einem Fahrzeug, umfassend Bestimmen und Überwachen eines Druckverlustpegels, **dadurch gekennzeichnet, daß** das Verfahren ferner Bestimmen und Überwachen eines Geschwindigkeitspegels des Fahrzeugs, und Alarmieren umfasst, wobei der Alarmpegel in Abhängigkeit von Pegeln von Druckverlustpegeln und von Fahrzeuggeschwindigkeitspegeln bestimmt wird.

## Revendications

1. Dispositif d'alarme en cas de dégonflage de pneumatique comprenant un mécanisme de détection de dégonflage pour détecter un dégonflage de pneumatique, **caractérisé par** un dispositif de mesure de la vitesse de véhicule et un mécanisme d'alarme pour déterminer un niveau d'alarme selon des niveaux de niveau de dégonflage de pneumatique détectes par le mécanisme de détection de dégonflage et selon les niveaux de vitesse du véhicule.

2. Procédé d'alarme pour le dégonflage de pneumatique sur un véhicule comprenant la détermination et le contrôle d'un niveau de dégonflage, caracteriae en ce que le procédé comprend, de plus, la détermination et le contrôle d'un niveau de vitesse du véhicule et la fourniture d'une alarme, dans lequel le niveau d'alarme est décidé d'après les niveaux de niveau de dégonflage et les niveaux de vitesse du véhicule.
